# EUROPEAN PATENT APPLICATION

(11) **EP 4 748 494 A1**
(43) Date of publication of application: **27.05.2026**
(21) Application number: 24215283.3
(22) Date of filing: 26.11.2024
(51) Int. Cl.: B01J 47/024, H01M 8/04044

(54) **ION EXCHANGER FILTER DEVICE AND ION EXCHANGER CARTRIDGE**

(71) Applicant: MANN+HUMMEL GmbH, 71636 Ludwigsburg (DE)
(72) Inventor: LEININGER, Simon, 71636 Ludwigsburg (DE); WILDERMUTH, Andreas, 71636 Ludwigsburg (DE); EBLE, Jonas, 71636 Ludwigsburg (DE)
(74) Representative: Mann + Hummel Intellectual Property

(57) **Abstract**

An ion exchanger filter device (100), in particular for a fuel cell system, the ion exchanger filter device (100) comprising a housing (102) comprising a cover (112) and at least one inflow opening (104) and at least one outflow opening (106) for a medium, the housing (102) extending in an axial direction (80), and an ion exchanger cartridge (10) being enclosed by the housing (102) and comprising one or more inflow ports (34) at an upstream end (20), and a circumferentially extending wall (32) enclosing a receptacle (16) filled with an ion exchanger material (12), the wall (32) comprising one or more outflow ports (18) at a downstream end (21) opposing the upstream end (20). A main flow path (50) through the ion exchanger cartridge (10) is provided, for the medium, between the one or more inflow ports (34) and the one or more outflow ports (18). The housing (102) further comprises a bypass channel (116) between the inflow opening (104) and the outflow opening (106), for the medium bypassing the ion exchanger cartridge (10). The ion exchanger cartridge (10) further comprises a closure element (40) configured to close the bypass channel (116) when the ion exchanger cartridge (10) is mounted in an intended mounting position to the housing (102).

## Description

### Technical Field

Embodiments relate to an ion exchanger filter device, in particular for a fuel cell system, as well as to an ion exchanger cartridge for an ion exchanger filter device.

### Background Art

Fuel cells have an electrical efficiency of approximately 50%. The remainder of the energy is obtained as heat. The latter must be discharged in order to keep the efficiency of the fuel cell as high as possible. For this purpose, a cooling medium flows about the cells. In case the cooling medium is electrically conductive, short circuiting between the cells may occur. Therefore, a deionization by means of an ion exchanger is necessary. Since the cooling liquid must fulfill also further properties such as anti-freezing, mixtures are used here, e.g. deionized water and mono-ethylene glycol in a ratio of 50:50.

Usually an ion exchanger cartridge needs to be sealed against the housing to ensure that the full flow of the cooling liquid passes through the cartridge. Without sealing a significant bypass would establish that lowers the performance/separation efficiency of the ion exchanger. On the other hand, in case of a high flow rate in the system a bypass might be desired. In this case the pressure drop should be lowered and the performance requirement can still be met.

WO 14174982 A1 discloses a cooling device comprising a resin water passage having sealed therein an ion-exchange resin which can remove impurity ions in coolant that cools a layer-built cell. Coolant is made to pass through ion-exchange resin in said resin water passage. The cooling device includes: a bypass passage which branches off from the resin water passage and which bypasses the ion-exchange resin; and an opening and closing means which closes the bypass passage according to the conducting state of the coolant.

JP 2012187439 A2 discloses an inner case housing the ion exchange resin being provided in an outer case composing the ion exchanger. The ions contained in a coolant are removed by allowing passage of the coolant into the inside of the inner case from the upper face of the case through the introduction pipe of the outer case, and the coolant is discharged from the exhaust pipe of the outer case. Here, an introduction space communicating with the introduction pipe and a discharge space communicating with exhaust pipe are formed between the outer and inner cases. Besides, the opening direction of the introduction pipe is formed to a direction along the upper face of an upper base of the inner case, and a bypass channel connecting the introduction space to the discharge space to bypass the inner case is formed.

### Summary

An object of the embodiments is to provide an improved ion exchanger filter device, in particular for a fuel cell system.

A further object of the embodiments is to provide an ion exchanger cartridge for the improved ion exchanger filter device.

According to an aspect of the embodiments the object is achieved by an ion exchanger filter device, in particular for a fuel cell system, the ion exchanger filter device comprising a housing comprising a cover and at least one inflow opening and at least one outflow opening for a medium, the housing extending in an axial direction, and an ion exchanger cartridge being enclosed by the housing and comprising one or more inflow ports at an upstream end, and a circumferentially extending wall enclosing a receptacle filled with an ion exchanger material, the wall comprising one or more outflow ports at a downstream end opposing the upstream end. A main flow path through the ion exchanger cartridge is provided, for the medium, between the one or more inflow ports and the one or more outflow ports. The housing further comprises a bypass channel between the inflow opening and the outflow opening, for the medium bypassing the ion exchanger cartridge. The ion exchanger cartridge further comprises a closure element configured to close the bypass channel when the ion exchanger cartridge is mounted in an intended mounting position to the housing.

According to a further aspect of the embodiments the further object is achieved by an ion exchanger cartridge for the ion exchanger filter device. The closure element extends from the wall.

Advantageous embodiments are described in the dependent claims, the description and the drawings.

In the proposed ion exchanger filter device a bypass is provided in the housing that can be kept open if the system flow rate is high. If no bypass is desired the bypass can be closed by a closure element that is attached to the ion exchanger cartridge. The closure element can, for instance, be formed as a pin that sticks into the bypass channel, as a plain surface that is covering the bypass channel or the like. Thus the bypass channel can be closed when mounting the ion exchanger cartridge to the housing of the ion exchanger filter device.

Advantageously the same housing can be used for different system requirements with or without bypass.

Even the same ion exchanger cartridge can be used for both options if the closure element can be removed, e.g. broken apart.

Using same parts for different requirements can reduce tooling costs, which is favorable for small quantities of ion exchanger filter devices produced.

Alternatively, two assembly positions of the ion exchanger cartridge can be provided. In one position the bypass channel can be closed when the ion exchanger cartridge is mounted, in the other position the bypass channel remains open when the ion exchanger cartridge is mounted.

According to the embodiments of the ion exchanger filter device, the cover may comprise connecting means connected to the ion exchanger cartridge. Advantageously, the ion exchanger cartridge and the cover are not firmly connected but by a loose connection, e.g. a bayonet connection.

According to the embodiments of the ion exchanger filter device, the connecting means may be a rotatable bayonet connection, and the cover may be rotatable against the ion exchanger cartridge when mounting the ion exchanger cartridge to the housing. In case the bypass is combined with a rotatable bayonet connection, there are further advantages, as an easy removal of the ion exchanger cartridge. Further, there is no rotation of the element resulting in a reduced possible damage of the seal, e.g. an O-ring.

According to the embodiments of the ion exchanger filter device, the cover may comprise an overlap region forming an annular gap between the ion exchanger cartridge and the housing and overlapping the one or more outflow ports in the axial direction, and the annular gap may be configured to provide a flow reversal for the medium leaving the one or more outflow ports. The ion exchanger cartridge can be inserted with the overlap region easily into the housing and connected thereto. Due to the overlap, the outflow port can be arranged at the downstream end of the receptacle of the cartridge so that an effective utilization of the ion exchanger material is provided.

According to the embodiments of the ion exchanger filter device, the one or more outflow ports may be arranged upstream of the at least one outflow opening in relation to a flow direction of the medium leaving the one or more outflow ports. An arrangement of the outflow port high up on the housing of the ion exchanger filter device with respect to the direction of gravity can in turn ensure that the ion exchanger filter arrangement can be vented sufficiently well.

The proposed ion exchanger cartridge is provided with a closure element that is arranged at the wall of the ion exchanger cartridge. When inserted into a housing of an ion exchanger filter device with a bypass for the medium and the bypass is not desired for a certain application the bypass may be closed by the closure element.

The closure element can be formed as a pin that sticks into the bypass channel or it can be a plain surface that is covering the bypass channel. Thus the bypass channel can be closed when mounting the ion exchanger cartridge to the housing of the ion exchanger filter device.

Thus the same housing of the ion exchanger filter device can be used for different system requirements with or without bypass.

Even the same ion exchanger cartridge can be used for both options if the closure element, e.g. the sealing pin, will be removed.

Using same parts for different requirements can reduce tooling costs, which is favorable for small quantities of ion exchanger filter devices produced.

Alternatively, two assembly positions of the ion exchanger cartridge can be provided. In one position the bypass channel can be closed when the ion exchanger cartridge is mounted, in the other position the bypass channel remains open when the ion exchanger cartridge is mounted.

According to the embodiments of the ion exchanger cartridge, the closure element may be a pin being extending in an axial direction, the pin being insertable into the bypass channel when the ion exchanger cartridge is mounted in the intended mounting position to the housing. The pin may advantageously stick into the bypass channel thus closing it.

According to the embodiments of the ion exchanger cartridge, a circumferential seal, in particular an O-ring, may be arranged at the pin and may be configured to seal the bypass channel when the pin is inserted into the bypass channel. Thus, a proper sealing of the bypass may be achieved when inserting the ion exchanger cartridge into the housing.

According to the embodiments of the ion exchanger cartridge, the closure element may be a plain surface covering the bypass channel. Alternatively, the bypass channel may also be closed by the plain surface and be properly sealed against medium bypassing the ion exchanger cartridge.

According to the embodiments, the ion exchanger cartridge may further comprise a lead-in chamfer arranged at the upstream end. Thus, inserting the ion exchanger cartridge into the housing and at the same time inserting the closure element into the bypass channel may properly be achieved.

According to the embodiments of the ion exchanger cartridge, the ion exchanger cartridge may further comprise at least one bayonet element arranged at the downstream end and configured to connect to a connecting means, in particular a rotatable bayonet connection, of the cover. In case the bypass is combined with a rotatable bayonet connection, there are further advantages, as an easy removal of the ion exchanger cartridge. Further, a rotation of the element does not occur resulting in a reduced possible damage of the seal, e.g. an O-ring.

### Brief Description of Drawings

The embodiments together with the above-mentioned and other objects and advantages may best be understood from the following detailed description of the embodiments, but not restricted to the embodiments.
Figure 1 shows an ion exchanger filter device, in particular for a fuel cell system, according to the embodiments in a partly sectional view.
Figure 2 is an enlarged view of the lower part of the ion exchanger filter device according to Figure 1.
Figure 3 shows the ion exchanger cartridge with the cover of the ion exchanger filter device in isometric view.
Figure 4 shows the ion exchanger cartridge with the cover of the ion exchanger filter device in partly sectional view.
Figure 5 is a side view of the ion exchanger cartridge of the ion exchanger filter device according to Figure 1.
Figure 6 is a top view of the housing of the ion exchanger filter device.
Figure 7 is a cross section of the housing.

### Description of Embodiments

In the drawings, like elements are referred to with equal reference numerals. The drawings are merely schematic representations, not intended to portray specific parameters of the embodiments. Moreover, the drawings are intended to depict only typical embodiments of the embodiments and therefore should not be considered as limiting the scope of the embodiments.

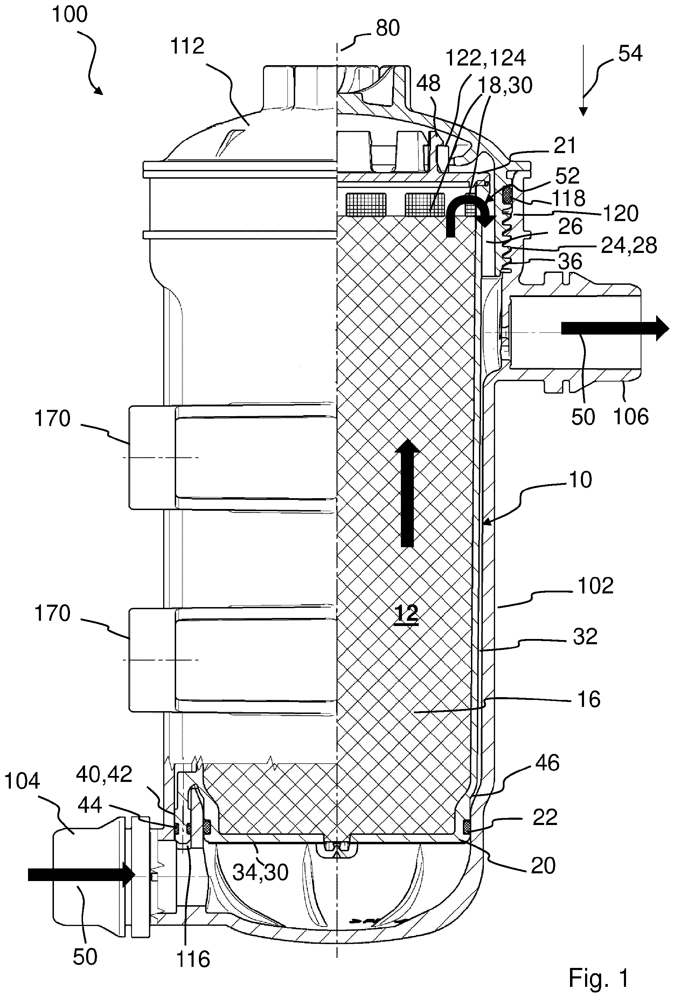

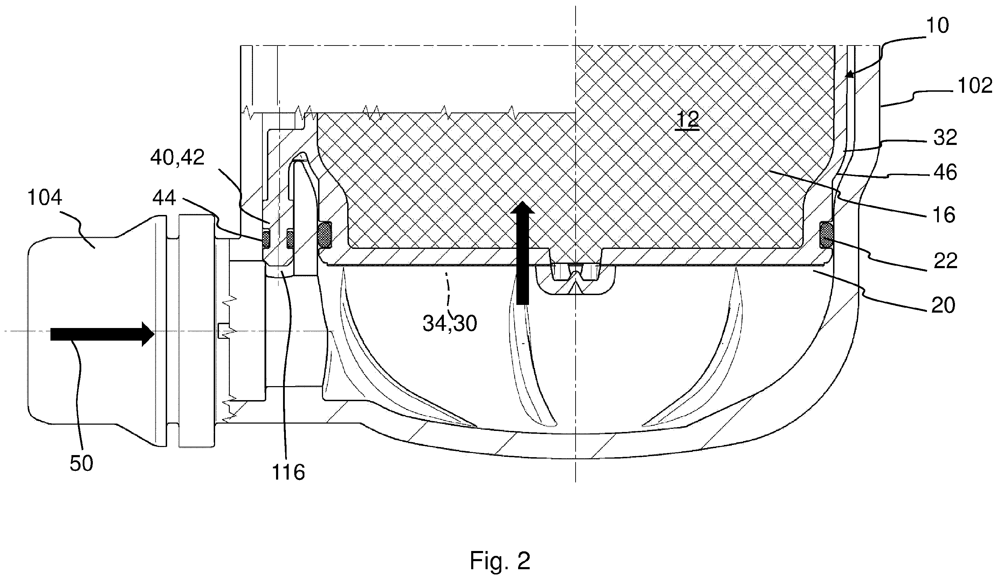

Figure 1 depicts an ion exchanger filter device 100, in particular for a fuel cell system, according to the embodiments in a partly sectional view. In Figure 2 an enlarged view of the lower part of the ion exchanger filter device 100 is depicted.

The ion exchanger filter device 100 comprises a housing 102 with a cover 112 and at least one inflow opening 104 and at least one outflow opening 106 for a medium. The housing 102 extends in an axial direction 80 and encloses an ion exchanger cartridge 10 with one or more inflow ports 34 at an upstream end 20 and with a circumferentially extending wall 32 enclosing a receptacle 16 filled with an ion exchanger material 12. The wall 32 comprises one or more outflow ports 18 distributed at or about a circumference of the circumferentially extending wall 32 at a downstream end 21, the downstream end 21 opposing the upstream end 20.

A main flow path 50, depicted by arrows, through the ion exchanger cartridge 10 is provided for the medium between the inflow ports 34 and the one or more outflow ports 18.

A bypass channel 116 is provided in the housing 102 between the inflow opening 104 and the outflow opening 106 for the medium bypassing the ion exchanger cartridge 10. The bypass channel 116 is arranged near the inflow opening 104 but extends through the whole length of the housing 102 in the axial direction 80.

The ion exchanger cartridge 10 is configured to provide a closure element 40 for selectively either closing or opening the bypass channel 116 when the ion exchanger cartridge 10 is mounted in an intended mounting position in the housing 102. In the position shown in Figure 1 the bypass channel 116 is closed by the closure element 40.

The closure element 40 of the embodiments shown in Figure 1 is formed as a pin 42 extending in an axial direction 80 and being inserted into the bypass channel 116 in the intended mounting position. A circumferential seal 44, in particular an O-ring, is arranged at the pin 42 for sealing the bypass channel 116 when the pin 42 is inserted into the bypass channel 116.

In alternative embodiments not shown, the closure element 40 may also be formed as a plain surface covering the bypass channel 116, wherein also a proper sealing of the bypass channel 116 may be achieved.

The ion exchanger cartridge 10 is provided with a lead-in chamfer 46 at the upstream end 20 for proper and easy positioning in the housing 102 and in particular proper positioning of the closure element 40 in the bypass channel 116.

The ion exchanger cartridge 10 is provided with a circumferential seal 22, in particular an O-ring, for sealing against the inner wall of the housing 102.

The cover 112 is connected to the ion exchanger cartridge 10 by a connecting means 122, in particular by a bayonet connection. The connecting means 122 may advantageously be a rotatable bayonet connection 124, wherein the cover 112 is rotatable against the ion exchanger cartridge 10 when mounting the ion exchanger cartridge 10 to the housing 102.

In case the bypass channel 116 is combined with a rotatable bayonet connection 124, there are further advantages, as an easy removal of the ion exchanger cartridge. Further, a rotation of the ion exchanger cartridge 10 does not occur which results in a reduced possible damage of the seal 22.

Therefore, a number of bayonet elements 48 are arranged at the downstream end 21 for being connected to the connecting means 122, in particular to the rotatable bayonet connection 124 of the cover 112.

The cover 112 comprises an overlap region 24 forming an annular gap 26 between the ion exchanger cartridge 10 and the housing 102 and overlapping the outflow ports 18 in the axial direction 80. The annular gap 26 provides a deflection 52 of the flow path 50 for a flow reversal for the medium leaving the outflow ports 18. The outflow ports 18 are arranged upstream of the outflow opening 106 in relation to the flow direction of the medium leaving the outflow ports 18.

The overlap region 24 is embodied as a connection section 28 configured to connect the ion exchanger cartridge 10 to the housing 102 of the ion exchanger filter device 100.

Advantageously, the connection section 28 is a thread section 36, wherein the thread section 36 comprises an outer thread for being mounted to the counter thread 120 of the housing 102. A radial seal 118, e.g. an O-ring, is provided for sealing between cover 112 and housing 102.

In Figure 1 a direction 54 of gravity is marked because the ion exchanger filter device 100 is usually operated in this position where the medium enters the housing 102 at the inflow opening 104, is then pumped through the ion exchanger cartridge 10 from the upstream end 20 to the downstream end 21 where the medium leaves the ion exchanger cartridge 10 through the outflow ports 18. The medium then flows around the gap 26 of the cover 112 to the outflow opening 106 leaving the housing 102.

Alternatively the ion exchanger filter device 100 may also be operated in another position, e.g. in a position rotated by 90° extending in a horizontal axis.

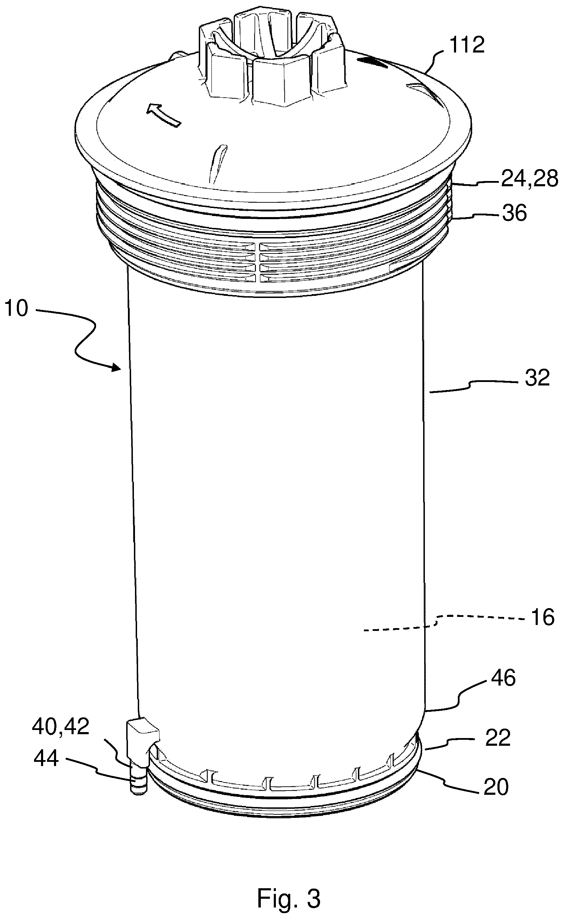

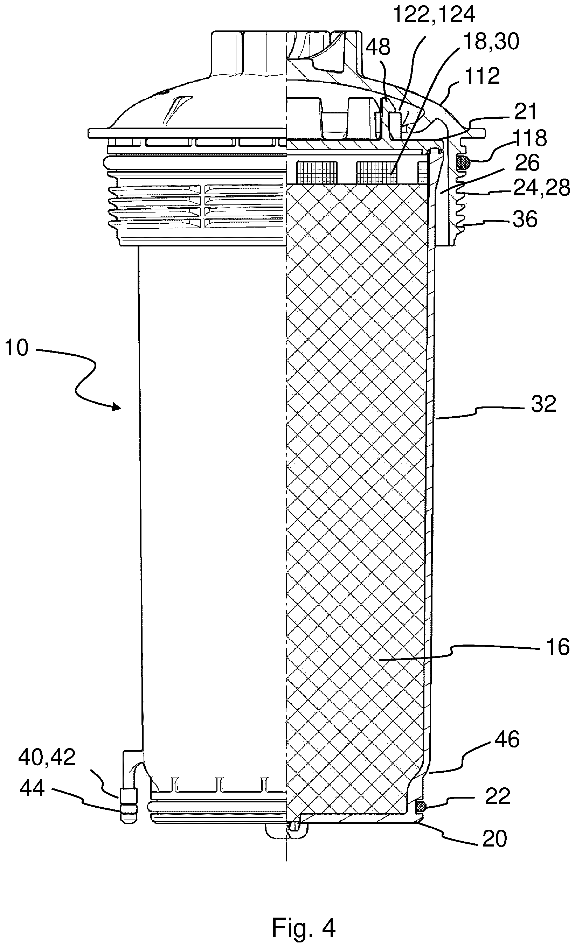

Figure 3 depicts the ion exchanger cartridge 10 with the cover 112 of the ion exchanger filter device 100 in isometric view. In Figure 4 the ion exchanger cartridge 10 with the cover 112 is depicted in partly sectional view.

The cover 112 is connected to the ion exchanger cartridge 10 via the connecting means 122 as depicted before in the Figures 1 and 2.

The ion exchanger cartridge 10 comprises the circumferentially extending wall 32 enclosing the receptacle 16 filled with the ion exchanger material 12.

The wall 32 comprises a number of outflow ports 18 distributed at or about the circumference of the circumferentially extending wall 32.

An improvement of the manufacturing process of the ion exchanger cartridge 10 can advantageously be obtained by a cartridge container with insert-molded screen fabric, wherein the screen fabric covers the inflow ports 34 as well as the outflow ports 18 of the ion exchanger cartridge. Advantage of this design is that only at one component insert molding is required. In this context, the inflow ports 34 is ideally oriented vertically and the outflow ports 18 are radially oriented in relation to the axial direction 80 of the ion exchanger cartridge 10.

The closure element 40 is arranged extending from the wall 32 provided for closing a bypass channel 116 of the housing 102 of the ion exchanger filter device 100 in an intended mounting position. The pin 42 of the closure element 40 is provided with the circumferential seal 44.

The upstream end 20 of the ion exchanger cartridge 10 is provided with the circumferential seal 22.

The overlap region 24 of the cover 112 is provided with the outward facing thread section 36 and with the circumferential seal 118 for being connected and sealed with the housing 102 of the ion exchanger filter device 100.

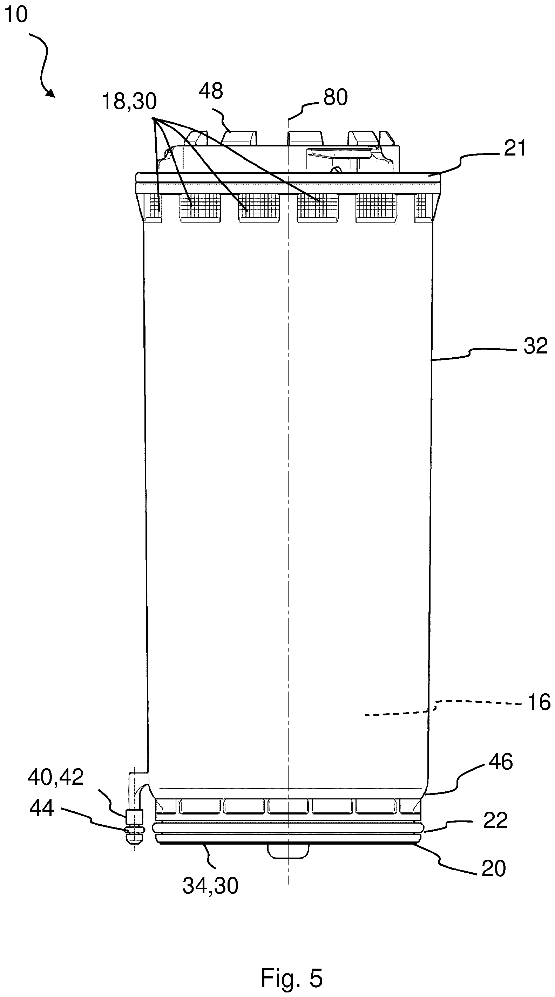

In Figure 5 a side view of the ion exchanger cartridge 10 of the ion exchanger filter device 100 is depicted.

With the cover 112 removed the number of outflow ports 18 distributed at or about the circumference of the circumferentially extending wall 32 is visible.

At the downstream end 21 of the ion exchanger cartridge 10 several bayonet elements 48 are arranged in a circle for cooperating with the connecting means 122 of the cover 112.

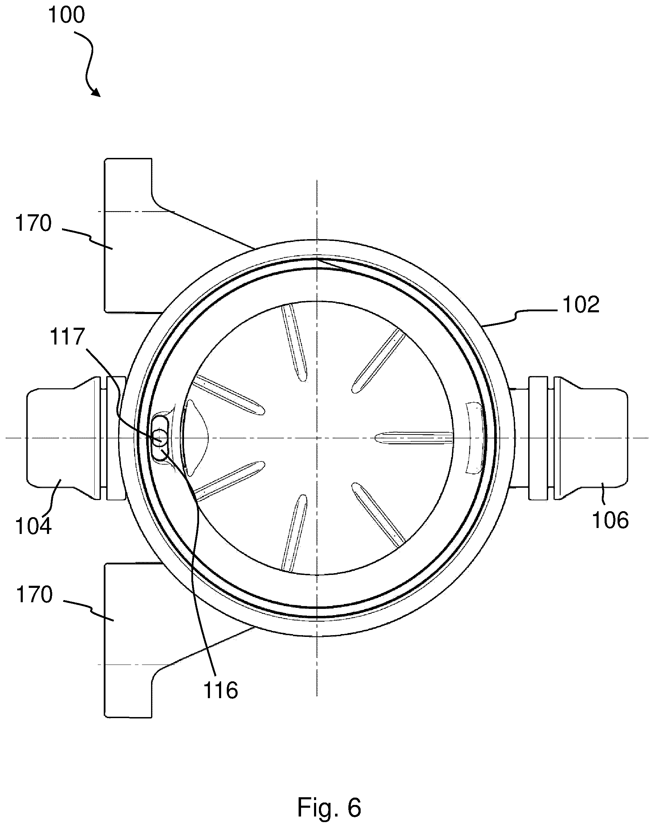

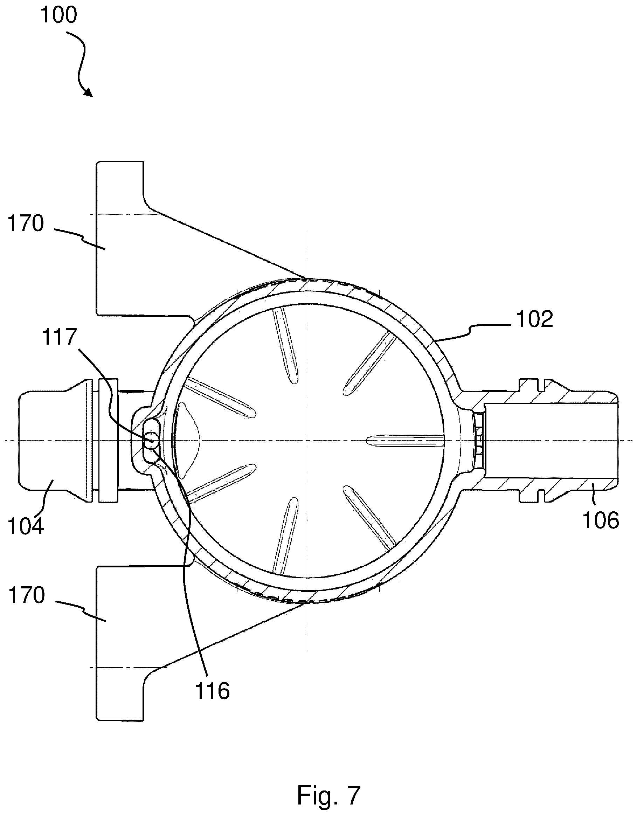

Figure 6 depicts a top view of the housing 102 of the ion exchanger filter device 100, whereas in Figure 7 a cross section of the housing 102 at the height of the outflow opening 106 is depicted.

In the Figures 6 and 7 the housing 102 is depicted showing the bypass channel 116 which is arranged at an outer periphery of the housing 102. The bypass channel 116 is provided with an opening 117 at the lower end near the inflow opening 104 which may be closed by the closure element 40 of the ion exchanger cartridge 10 when the ion exchanger cartridge 10 is inserted into the housing 102.

### Reference Signs List

- 10: ion exchanger cartridge
- 12: ion exchanger material
- 16: receptacle
- 18: outflow port
- 20: upstream end
- 21: downstream end
- 22: seal
- 24: overlap region
- 26: gap
- 28: connection section
- 30: screen fabric
- 32: wall
- 34: inflow port
- 36: thread section
- 40: closure element
- 42: pin
- 44: seal
- 46: chamfer
- 48: bayonet element
- 50: flow path
- 52: deflection
- 54: direction of gravity
- 80: axial direction
- 100: ion exchanger filter device
- 102: housing
- 104: inflow opening
- 106: outflow opening
- 112: cover
- 116: bypass channel
- 117: opening
- 118: seal
- 120: counter thread
- 122: connecting means
- 124: bayonet connection
- 170: mounting means

## Claims

1. An ion exchanger filter device (100), in particular for a fuel cell system, the ion exchanger filter device (100) comprising:
a housing (102) comprising a cover (112) and at least one inflow opening (104) and at least one outflow opening (106) for a medium, the housing (102) extending in an axial direction (80); and
an ion exchanger cartridge (10) being enclosed by the housing (102) and comprising one or more inflow ports (34) at an upstream end (20), and a circumferentially extending wall (32) enclosing a receptacle (16) filled with an ion exchanger material (12), the wall (32) comprising one or more outflow ports (18) at a downstream end (21) opposing the upstream end (20),
wherein a main flow path (50) through the ion exchanger cartridge (10) is provided, for the medium, between the one or more inflow ports (34) and the one or more outflow ports (18),
wherein the housing (102) further comprises a bypass channel (116) between the inflow opening (104) and the at least one outflow opening (106), for the medium bypassing the ion exchanger cartridge (10), and
wherein the ion exchanger cartridge (10) further comprises a closure element (40) configured to close the bypass channel (116) when the ion exchanger cartridge (10) is mounted in an intended mounting position to the housing (102).

2. The ion exchanger filter device (100) according to claim 1, wherein the cover (112) comprises a connecting means (122) connected to the ion exchanger cartridge (10).

3. The ion exchanger filter device (100) according to claim 2, wherein the connecting means (122) is a rotatable bayonet connection (124), and
wherein the cover (112) is rotatable against the ion exchanger cartridge (10) when mounting the ion exchanger cartridge (10) to the housing (102).

4. The ion exchanger filter device (100) according to any one of preceding claims, wherein the cover (112) comprises an overlap region (24) forming an annular gap (26) between the ion exchanger cartridge (10) and the housing (102) and overlapping the one or more outflow ports (18) in the axial direction (80), and
wherein the annular gap (26) is configured to provide a flow reversal for the medium leaving the one or more outflow ports (18).

5. The ion exchanger filter device (100) according to any one of preceding claims, wherein the one or more outflow ports (18) are arranged upstream of the at least one outflow opening (106) in relation to a flow direction of the medium leaving the one or more outflow ports (18).

6. An ion exchanger cartridge (10) for the ion exchanger filter device (100) according to any one of preceding claims,
wherein the closure element (40) extends from the wall (32).

7. The ion exchanger cartridge (10) according to claim 6, wherein the closure element (40) is a pin (42) extending in an axial direction (80), the pin (42) being insertable into the bypass channel (116) when the ion exchanger cartridge (10) is mounted in the intended mounting position to the housing (102).

8. The ion exchanger cartridge (10) according to claim 7, wherein a circumferential seal (44), in particular an O-ring, is arranged at the pin (42) and is configured to seal the bypass channel (116) when the pin (42) is inserted into the bypass channel (116).

9. The ion exchanger cartridge (10) according to claim 6, wherein the closure element (40) is a plain surface covering the bypass channel (116).

10. The ion exchanger cartridge (10) according to any one of claims 6 to 9, further comprising a lead-in chamfer (46) arranged at the upstream end (20).

11. The ion exchanger cartridge (10) according to any one of claims 6 to 10, further comprising at least one bayonet element (48) arranged at the downstream end (21) and configured to connect to a connecting means (122), in particular a rotatable bayonet connection (124), of the cover (112).
